**Europäisches Patentamt**

**European Patent Office**

**Office européen des brevets**

(11) Veröffentlichungsnummer : **0 076 429**
**B1**

(12) **EUROPÄISCHE PATENTSCHRIFT**

(45) Veröffentlichungstag der Patentschrift :
26.06.85

(51) Int. Cl.⁴ : **D 04 H 1/60, C 08 L 97/02**

(21) Anmeldenummer : **82108742.6**

(22) Anmeldetag : **22.09.82**

(54) Verfahren zum Herstellen von mit Phenolharz verfestigter Vliesstoffe, insbesondere Formkörper.

(30) Priorität : **02.10.81 DE 3139267**

(43) Veröffentlichungstag der Anmeldung :
**13.04.83 Patentblatt 83/15**

(45) Bekanntmachung des Hinweises auf die Patenterteilung : **26.06.85 Patentblatt 85/26**

(84) Benannte Vertragsstaaten :
**DE FR GB IT SE**

(56) Entgegenhaltungen :
**DE-A- 1 435 124**
**DE-A- 2 553 459**
**GB-A- 1 397 665**
**MELLIAND TEXTILBERICHTE, Band 56, November 1975, Seiten 916-919, Heidelberg, DE. D. EISELE: "Phenolharzverfestigte Vliesstoffe aus organischem Fasergut"**

(73) Patentinhaber : **Johann Borgers GmbH. & Co. KG**
**Stenerner Weg**
**D-4290 Bocholt (DE)**

(72) Erfinder : **Eisele, Dieter**
**von Welfeldstrasse 14**
**D-4290 Bocholt-Barlo (DE)**

(74) Vertreter : **Mentzel, Norbert, Dipl.-Phys. et al**
**Patentanwälte Dipl.-Phys. Buse Dipl.-Phys. Mentzel**
**Dipl.-Ing. Ludewig Unterdörnen 114**
**D-5600 Wuppertal 2 (DE)**

## Beschreibung

Mit Phenolharz verfestigte Vliesstoffe sind vielfach bekannt (Melliand-Textilberichte 56 (1975) 915-919 sowie 60 (1979) 135 ; « Harte Preßformteile (HPF) aus phenolharzverfestigtem Reißfasergut », 48 S., Broschüre, Johann Borgers GmbH & Co. KG., Bocholt, 1981). Beim Herstellungsverfahren wird zunächst ein pulverförmiger mit Hexamethylentetramin angereicherter Novolak in das Fasergut eingebracht und aus diesem Fasergut dann ein Vlies hergestellt. Aus Kostengründen wird als Fasergut überwiegend Reißfasergut verwendet, das im Recyclingverfahren aus Gewebeabschnitten gewonnen wird. Der Novolak wird auf dem Wege saurer Kondensation von Phenol mit Formaldehyd gewonnen, wie aus dem linken Teil der Formel B) der beiliegenden Formelsammlung zu erkennen ist. Für die Überführung des Novolaks in den Resitzustand dient das vorerwähnte Hexamethylentetramin, was aus dem rechten Teil der Formel B) zu ersehen ist. Das Hexamethylentetramin fungiert sowohl als Formaldehyd-Donator zur Erzeugung von Methylenbrücken sowie als Katalysator durch Entwicklung von Ammoniak ($NH_3$). Dies geschieht in der Hitze im feuchten Milieu des Faservlieses, denn an das Fasergut aus Baumwolle ist stets Wasser gebunden. Die Reaktion läuft dabei gemäß Formel A.) der beiliegenden Formelsammlung im Sinne des von links nach rechts weisenden Pfeiles ab.

Die Hitzebehandlung für den Chemismus der abschließenden Kondensation gemäß Formel B) aufgrund der Zersetzung nach Formel A) kann in verschiedener Weise erfolgen. Von besonderer Bedeutung ist dabei die Hitzebehandlung in einer Formpresse, wo aus dem Vliesstoff ein Formkörper erzeugt wird, dessen schalldämpfende oder wärmedämmende Wirkung wichtig ist. Ein solcher Formkörper wird als Polsterteil oder Verkleidungsteil in einem weiten Einsatzgebiet verwendet. Für eine rationelle Herstellung solcher verfestigter Vliesstoffe kommt es auf eine schnelle Wärmebehandlung an, die es bei einer Formpresse erforderlich macht die Pressenhälften auf eine hohe Temperatur zu bringen, die im Grenzbereich der Zersetzung des Baumwoll-Fasergutes liegt. Danach macht sich gelegentlich ein unangenehmer Geruch bemerkbar, der auf aminische Substanzen schließen läßt. Sie können vor allem bei der sauren wie auch alkalischen Reduktion des Hexamethylentetramins unter gewissen Bedingungen entstehen. Trimethylamin $(CH_3)_3N$ ist ein derartiger Körper, es stellt den typischen Fischgeruch dar.

Diese unangenehme Eigenschaft stört beim Gebrauch eines solchen verfestigten Vliesstoffes zunächst und schränkt dessen Verwendung vorübergehend ein.

Die Zugabe von Geruchsmarkierungsmitteln oder Deckparfümen ist andererseits umständlich, kostenaufwendig und bringt lediglich nur eine Reduzierung des Geruchs.

Der Erfindung liegt die Aufgabe zugrunde ein einfaches, preiswertes Verfahren zur Herstellung von mit Phenolharz verfestigten Vliesstoffen, insbesondere als Formkörper, zu entwickeln, die von vornherein und mit Sicherheit frei sind von unangenehmem aminischem Geruch.

Die Erfindung hat erkannt, daß die unangenehme Geruchsbildung insgesamt von drei Einflußgrößen abhängt, nämlich von der Qualität des eingesetzten Reißfaserguts, von der Temperaturführung bei der Härtung des Novolaks und von dem Ablauf des Chemismus bei der Kondensation. Das Reißfasergut besteht im wesentlichen aus Baumwolle (Cellulose) und kann sog. « Knitterfreiharze » auf der Basis von Harnstoff-Formaldehyd-Kondensationsprodukten enthalten. Bei übermäßiger Hitzeeinwirkung, die für eine schnell ablaufende Fertigung von verfestigten Vliesstoffen unumgänglich ist, zersetzt sich die Baumwolle u. U. unter Bildung sauer reagierender Crack-Produkte. Die Knitterfreiharze sind gleichermaßen einem thermooxidativem Abbau unterworfen, wo bei gleichzeitiger Einwirkung von Feuchte sich eine hydrolytische Spaltung ergeben. Man könnte versuchen den Einfluß des Reißfasergutes auf die Geruchsbildung zu vermeiden, wenn man Reißfasergut aus mehrfach gewaschenen Gewebestücken verwendet. Die Waschprozesse sollen die « Knitterfreiharze » und etwaige andere geruchsbildende Substanzen in der Ausrüstung der Ausgangsstoffe beseitigen. Dieser Arbeitsaufwand ist aber kostspielig und nicht immer erfolgreich.

Die Überführung des Novolaks in das Phenolharz (Resitzustand) gemäß Formel B) ist eine entscheidend von der Höhe der Behandlungstemperatur und der Behandlungsdauer abhängige Kondensationsreaktion. Wird diese Reaktion aus Produktionstechnischen Gründen, wie erläutert wurde, unter sehr hohen Temperaturen ausgeführt, so zersetzt sich spontan das Hexamethylentetramin im Oberflächenbereich des Faservlieses, wo durch die Kontaktberührung mit der Formpresse die höchsten Temperaturen entstehen. Stöchiometrisch gesehen, wird stets mit einem hohen Überschuß an Hexamethylentetramin gearbeitet. So ist zu vermuten, daß der in den stark erhitzten Oberflächenbereichen das Faservlieses sich abspaltende Ammoniak nach innen hin in bezug auf den Querschnitt alkalische Reduktion des Hexamethylentetramins bewirkt und ggfs. zur Bildung verschiedener Amine, wie Mono- oder Trimethylamin, führen kann. Die für ein schnelles Herstellungsverfahren erforderliche übermäßige Hitzeeinwirkung an den Oberflächen der Vliesstoffe bringt andererseits eine Beschädigung des dort befindlichen Fasergutes und bildet saure Körper, die zu Aminsalzen führen. Um diesem Übel abzuhelfen, könnte man den Härtungsprozeß im Vliesstoff schonender durchführen, indem man niedrigere Behandlungstemperaturen und längere Behandlungszeiten anwendet. Dies erfordert aber eine lange Verfahrensdauer, die sich in einer nicht vertretbaren Verteuerung des Produkts auswirkt. Man könnte auch versuchen Frischluft durchzusaugen, doch auch dies ist aufwendig und letztlich nicht erfolgssicher.

Man könnte schließlich versuchen den Geruch dadurch zu beseitigen, daß man die Novolake mit einem reduzierten Gehalt an Hexamethylentetramin anwendet, doch ist man dann gezwungen als Reaktionsbeschleuniger wirkende Oxide, wie CaO oder MgO zuzusetzen. Diese Reaktion liefert abschließend keine einwandfreie Vernetzung beim Kondensieren, weshalb die Qualität des Produkts gefährdet ist, Wegen solcher Reaktionsbeschleuniger ist die Ausgangssubstanz auch wenig lagerbeständig und es entsteht möglicherweise erhöhte Explosionsgefahr.

Die Erfindung löst dieses Problem einfach dadurch, daß vor der Hitzebehandlung auf die Oberfläche des Vlieses eine bei Hitze Ammoniak abspaltende Substanz aufgebracht wird. Als solche Substanz eignet sich z. B. Harnstoff. Die Folge dieser Maßnahme ist geradezu verblüffend. Der sich dabei ergebende Chemismus läßt sich etwa folgendermaßen deuten :

Der Harnstoff zersetzt sich unter Hitzeeinwirkung in Ammoniak ($NH_3$). Gleichzeitig entstehen dabei Kondensationsprodukte vom Typ Biuret oder Triuret, was aus der Formel C) der beiliegenden Formelsammlung zu entnehmen ist. Das Ammoniak entsteht bei der hohen Hitzeeinwirkung an der Oberfläche spontan in hoher Konzentration und durchdringt als Gas schlagartig den gesamten Querschnitt des Vlieses. Durch die höhere Ammoniakkonzentration im Oberflächenbereich scheint die aus der Formel A) ersichtliche Reaktion im Sinne des unteren, von rechts nach links gerichteten Pfeils begünstigt zu werden, wodurch die Kondensationsprodukte in den äußeren Querschnittsbereichen langsamer entstehen. Die bisher im inneren Bereich des Faservlieses nach dem Stand der Technik nur verzögernd einsetzende Kondensation wird bei der Erfindung durch das in hoher Konzentration dort hingelangende Ammoniak-Gas wesentlich erhöht, weil dieses bei den dortigen niedrigeren Temperaturen als Katalysator fördernd wirkt. Damit läuft der Kondensationsprozeß, über den Querschnitt des Vliesstoffs gesehen, wesentlich gleichmäßiger innen und außen ab. Die Spaltung des Hexamethylentetramins wird dadurch überall gleichzeitig initiiert, weil überall praktisch das selbe Milieu vorliegt.

Biuret und Triuret gemäß Formel C) entstehen in den Oberflächenbereichen und sind in der Lage mit dem überschüssigen Formaldehyd, das aus den Reaktionen nach Formel A) aus den inneren Bereichen kommt, im Vlies weiter zu kondensieren. Dabei entstehen auf der Oberfläche des Vlieses Körper, die einen wichtigen Thermostabilisierungseffekt ausüben. Dadurch wird gleichzeitig die Bildung sauer reagierender Zersetzungsprodukte im Oberflächenbereich verhindert und die Entstehung von Aminsalzen vermieden. Zu erwähnen ist noch, daß für die Zersetzung des Harnstoffs in den Oberflächenbereichen auch Wärme verbraucht wird. Durch diesen Vorgang wird der Thermostabilisierungseffekt beim Herstellungsprozeß zusätzlich gefördert.

Die bei Hitze Ammoniak abspaltende Substanz, wie der Harnstoff, kann unmittelbar auf die Oberfläche des zu behandelnden Vlieses aufgebracht werden. Es ist aber vorteilhaft mit dieser Substanz zunächst ein dünnes Flächengebilde auszurüsten und dieses vor der Hitzebehandlung des Vlieses oberflächig aufzubringen. Die Ammoniak abgebende Substanz kann durch Beschichten, Tränken, Pflatschen, Sprühen oder Rakeln auf das Flächengebildet aufgebracht werden. Als Flächengebilde kann seinerseits ein sehr dünnes Faservlies verwendet werden, das die Oberflächenschicht des fertigen Vliesstoffes zu bilden hat.

Alternativ kann als Flächengebilde auch ein textiles Fadenprodukt, wie ein Gewebe oder Gewirke verwendet werden. Man könnte auch eine Papierschicht (Cellulose) als Flächengebilde verwenden. Die Substanz bzw. das damit versehene Flächengebilde kann einseitig oder beidseitig des mit Novolak plus Hexamethylentetramin ausgerüsteten Vlieses aufgebracht werden.

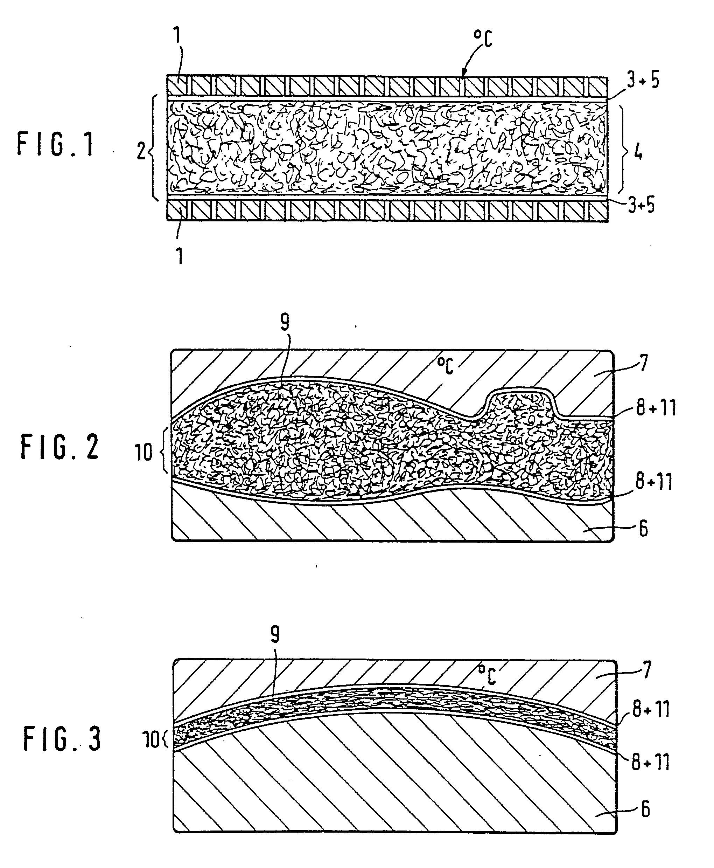

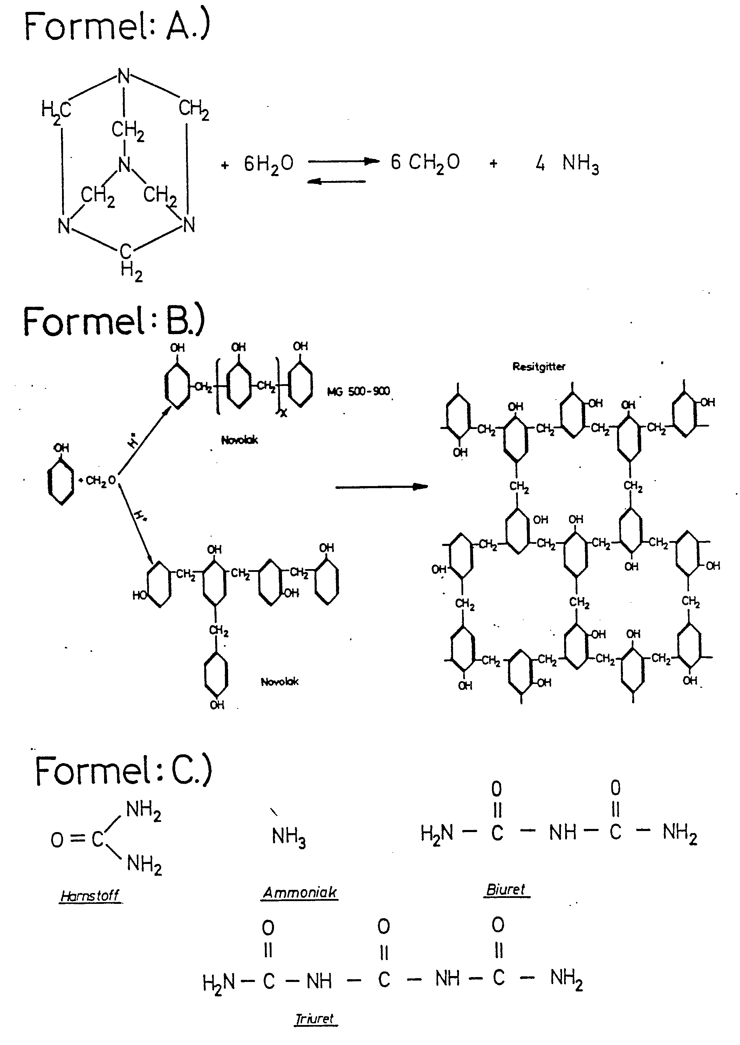

In der Zeichnung ist die Erfindung in drei Ausführungsbeispielen dargestellt. Die Fig. 1, 2 und 3 zeigen Querschnittansichten durch einen Vliesstoff während des Verfahrensablaufs.

Im Falle der Fig. 1 befindet sich ein mit Novolak durch und durch versetztes Faservlies 2 zwischen gelochten Transportbändern 1. An den beidseitigen Oberflächen 3 des Vlieses ist ein Auftrag von Harnstoff aufgebracht. Das Vlies besteht aus Reißfasergut, ist durch Kardieren gebildet und durch Nadeln mechanische leicht vorverfestigt. Das Reißfasergut steht mit dem Novolak in einem Gewichtsverhältnis von 70 : 30 mit 1 000 g/m². Das Vlies ist beidseitig oberflächig mit einer 5 %igen Harnstofflösung in Wasser geleimt. Die Substanzaufnahme beträgt 9,5 g/m² auf jeder Seite. Nach Vortrocknung des Vlieses wird durch Hitzebehandlung die Kondensation durchgeführt. Die Hitzebehandlung erfolgt in einem mit Heißluft betriebenen Kanal, in welchem die erwähnten Transportbänder 1 angeordnet sind, zwischen denen sich das Vlies 2 befindet. Die Temperatur der Heißluft beträgt 198 °C und die Behandlungsdauer 2,85 Minuten, wobei im Innern des Faservlieses 163 °C erreicht werden. Die Zersetzung des oberflächigen Harnstoffauftrags 3 erfolgt durch die auftretende Kontakthitze an den Transportbändern 1 sowie durch die Konvektion der Heißluft. Die regulierende Wirkung des Ammoniaks ($NH_3$) erfolgt im ganzen Bereich 4 des Vlieses 2. In den Oberflächenbereichen 5 ergibt sich eine stabilisierende Wirkung durch die gebildeten Kondensationsprodukte.

Im Ausführungsbeispiel von Fig. 2 wird ein Vlies 9 aus Reißfasergut verwendet, wobei die Fasern gegenüber dem das Vlies durchsetzenden Novolak im Verhältnis von 65 : 35 angewendet werden bei einem Flächengewicht von 1 830 g/m². Das Vlies 9 wird beidseitig durch Flächengebilde überdeckt, die aus einem dünnen Abdeckvlies 8 bestehen 8 bestehen. Das Abdeckvlies ist aus 165 g/m² Polyesterfasern gebildet und mit oleo/hydrophobierenden Substanzen und mit Harnstoff ausgerüstet. Der Harnstoffauftrag beträgt 12 g/m² auf jeder der beiden Seiten. Als Kaschierhilfe wird zwischen das zu verfestigende Vlies 9 und sein dünnes Abdeckvlies 8 eine durch an Nadeln vielfach perforierte, in der Hitze schmelzende Polyäthylenfolie eingelegt. Dieses kombinierte Vorprodukt 8, 9 wird nun zur Hitzebehandlung zwischen die beiden Formhälften 6, 7 einer Formpresse gebracht, wobei die Matrize 6 auf 195 °C und die Patrize 7 auf 210 °C aufgeheizt wird. Die Zeitdauer des Preßvorgangs beträgt 3,2 Minuten. Die Dekomposition des Harnstoffs in den Abdeckvliesen 8 erfolgt hier allein durch den Kontakt der beiden Formhälften 6, 7. Die regulierende Wirkung des Ammoniaks macht sich im ganzen Bereich 10 bemerkbar. In den Oberflächenbereichen 11, wo die Abdeckvliese 8 angeordnet sind, entstehen aus dem Harnstoff Kondensationsprodukte, die dort ihre thermostabilisierende Wirkung entfalten.

Im Ausführungsbeispiel der Fig. 3 wird ein aerodynamisch erzeugtes Faservlies 9 aus Reißfasergut verwendet, was in einem Gewichtsverhältnis von 67 : 33 zu dem ihn durchsetzenden Novolak angewendet wird. Das Faservlies 9 besitzt ein Flächengewicht von 2 400 g/m² und ist wiederum beidseitig mit einem Abdeckvlies 8 versehen und mit diesem verpreßt. Das Abdeckvlies 8 besteht aus einer Mischung zwischen Polyester- und Viskose-Fasern im Verhältnis 70 : 30 bei 20 g/m². Das Abdeckvlies 8 ist mit 11 g/m² Harnstoff beaufschlagt. Als Kaschierhilfe wird zwischen das eigentliche Vlies 9 und die beidseitigen Abdeckvliese 8 ein in der Hitze schmelzendes Polyäthylen mit 15 g/m² punktförmig aufgetragen. Die Hitzebehandlung erfolgt, wie schon im Fall der Fig. 2 beschrieben, zwischen den beiden Formhälften 6, 7 einer Formpresse.

Im Fall der Fig. 2 und 3 ist das Endprodukt ein Formkörper, der als schall- und wärme-dämpfendes oder polsterndes Baumittel verwendet werden kann. Dafür gibt es die verschiedensten Einsatzgebiete. Solche Formkörper können zur Luftschallabsorbtion im Bereich des Daches verwendet werden. Die Formkörper können zur Schalldämpfung für die Isolation von Motorhauben von Kraftfahrzeugen oder dergleichen verwendet werden. Weil sie zugleich interessante mechanische Festigkeitswerte aufweisen, können sie ferner als Basiselement für Türen und Seitenverkleidungen von Fahrzeugen oder dergleichen verwendet werden. Die jeweils erforderliche Form erhalten die Vliesstoffe in der beschriebenen Formpresse 6, 7. Phenolharz verfestigte Vliesstoffe sind im Automobilbau von steigender Bedeutung.

Die Kombination des Reißfaserguts mit dem pulvrigen Novolak erfolgt entweder vor oder während der Vliesbildung. Die Vliesbildung selbst wird sowohl mechanisch, über Kardiermaschinen, wie auch aerodynamischem Wege ausgeführt. Die Härtung des Novolaks kann, wie im Fall der Fig. 1 erläutert wurde, kontinuierlich in Heizkanälen erfolgen oder diskontinuierlich in Formpressen.

In Abhängigkeit von den jeweiligen Anwendungsbereichen können die phenolharzverfestigten Vliesstoffe nach ihren Rohdichten differenziert werden, die zwischen 50-100 kg/m³, 100-250 kg/m³ oder 250-1 000 kg/m³ liegen. Die Rohdichten können auch in ein und demselben Formteil vorkommen, je nach dem Grad örtlicher Verdichtung.

Nach der Erfindung kommt es auf die oberflächige Behandlung des Vlieses mit Harnstoff bzw. einer Ammoniak abgebenden Substanz an, weil dort die Hitze wirksam wird und zur möglichst sofortigen Entwicklung des Ammoniaks dienlich ist, das sich als Gas sogleich über den ganzen Querschnitt des Vlieses verteilt und zu der geschilderten gleichmäßigen Reaktion des Novolaks über den ganzen Querschnitt führt. Das Einbringen des Harnstoffs in das Querschnittinnere des Vlieses wäre dazu nicht zweckdienlich. Wegen der dort verspätet anfallenden niedrigeren Temperatur kann sich der Harnstoff nämlich nich vollständig umsetzen.

**Patentansprüche**

1. Verfahren zum Herstellen von mit Phenolharz verfestigten Vliesstoffen, insbesondere als Formkörper, wobei zunächst ein pulverförmiger mit Hexamethylentetramin angereicherter Novolak in das Fasergut eingebracht wird, dann daraus das Vlies hergestellt wird und das Vlies schließlich einer Hitzebehandlung unterworfen wird, insbesondere in einer Formpresse, dadurch gekennzeichnet, daß vor der Hitzebehandlung auf die Oberfläche des Vlieses eine bei Hitze Ammoniak abspaltende Substanz aufgebracht wird.

2. Verfahren nach Anspruch 1, dadurch gekennzeichnet, daß die aufgebrachte Substanz Harnstoff ist.

3. Verfahren nach Anspruch 1 oder 2, dadurch gekennzeichnet, daß vor der Hitzebehandlung auf das Vlies ein Flächengebilde aufgelegt wird, welches mit der Ammoniak abspaltenden Substanz ausgerüstet ist.

4. Verfahren nach Anspruch 3, dadurch gekennzeichnet, daß als Flächengebilde ein dünnes Abdeckvlies verwendet wird.

5. Verfahren nach Anspruch 3, dadurch gekennzeichnet, daß als Flächengebilde ein textiles Fadenprodukt, wie ein Gewebe oder ein Gewirke verwendet wird.

6. Verfahren nach einem oder mehreren der Ansprüche 1-5, dadurch gekennzeichnet, daß die Ammoniak abspaltende Substanz auf einer Flächenseite des Vlieses aufgebracht wird.

7. Verfahren nach einem oder mehreren der Ansprüche 1-5, dadurch gekennzeichnet, daß die Ammoniak abspaltende Substanz beidseitig des Vlieses aufgebracht wird.

## Claims

1. Method for the production of phenolic resin bonded nonwovens, especially as shaped parts, to which a powdered novolak, with hexamethylenetetramine added, is brought into the fibermaterial first, then the web is formed from this and the web is finally subjected to heat treatment, especially in a moulding press, characterized that before heat treatment a substance, splitting off ammonia by heat, is added to the surface of the web.

2. Method according to claim 1, characterized that the substance applied is urea.

3. Method according to claim 1 or 2, characterized that a sheet material is put on the web before heat treatment, which is sized with substance splitting off ammonia.

4. Method according to claim 3, characterized that a thin covering nonwoven is used as the sheet material.

5. Method according to claim 3, characterized that a textile thread product, i. e. fabric or knitted wear, is used as the sheet material.

6. Method according to one of several of the claims 1-5, characterized that the substance splitting off ammonia is applied to one side of the web.

7. Method according to one or several of the claims 1-5, characterized that the substance splitting off ammonia is applied to both sides of the web.

## Revendications

1. Procédé de fabrication de nappes non tissées stabilisées à la résine phénolique, en particulier de corps moulés, au cours duquel est d'abord introduite dans la matière fibreuse une novolaque pulvérulente enrichie d'hexaméthylène-tétramine, d'où est ensuite tirée la nappe, celle-ci étant enfin soumise à un traitement thermique, en particulier dans une presse à mouler, caractérisé en ce qu'une substance éliminant l'ammoniac à chaud est appliquée sur la surface de la nappe avant le traitement thermique.

2. Procédé selon revendication 1, caractérisé en ce que la substance appliquée est de l'urée.

3. Procédé selon revendications 1 ou 2, caractérisé en ce que précédemment au traitement thermique, un élément surfaceur enduit de la substance fractionnant l'ammoniac est appliqué sur la nappe.

4. Procédé selon revendication 3, caractérisé en ce qu'une nappe mince de revêtement sert d'élément surfaceur.

5. Procédé selon revendication 3, caractérisé en ce qu'un produit filiforme textile, tel un tissu ou un tissu à mailles, sert d'élément surfaceur.

6. Procédé selon une ou plusieurs des revendications 1 à 5, caractérisé en ce que la substance fractionnant l'ammoniac est enduite sur une des deux surfaces de la nappe.

7. Procédé selon une ou plusieurs des revendications 1 à 5, caractérisé en ce que la substance fractionnant l'ammoniac est enduite sur les deux surfaces de la nappe.

FIG.1

FIG.2

FIG.3

Formel: A.)

$$+ \; 6H_2O \; \rightleftharpoons \; 6\,CH_2O \; + \; 4\;NH_3$$

Formel: B.)

Novolak

MG 500-900

Novolak

Resitgitter

Formel: C.)

Harnstoff

$NH_3$

Ammoniak

$H_2N - \overset{\overset{\displaystyle O}{\|}}{C} - NH - \overset{\overset{\displaystyle O}{\|}}{C} - NH_2$

Biuret

$H_2N - \overset{\overset{\displaystyle O}{\|}}{C} - NH - \overset{\overset{\displaystyle O}{\|}}{C} - NH - \overset{\overset{\displaystyle O}{\|}}{C} - NH_2$

Triuret